# EUROPÄISCHE PATENTSCHRIFT

(11) **EP 0 337 510 B1**
(45) Veröffentlichungstag und Bekanntmachung des Hinweises auf die Patenterteilung: **01.02.1995**
(21) Anmeldenummer: 89110862.3
(22) Anmeldetag: 09.04.1986
(51) Int. Cl.: G01J 5/00

(54) **Verfahren und Vorrichtung zur Wärmemessung an einem offenen Behältnis sowie Verwendung des Verfahrens bzw. der Vorrichtung für offene Dosenkörper**
Method and apparatus for measuring heat of an open recipient and use of the method viz. apparatus for open can bodies
Procédé et dispositif de mesure de la chaleur d'un récipient ouvert ainsi qu'utilisation du procédé respectivement du dispositif pour des corps de boîtes ouvertes

(30) Priorität: 12.04.1985 CH 1577/85
(43) Veröffentlichungstag der Anmeldung: 18.10.1989
(62) Teilanmeldung aus: 86901769.9
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch, Jacques J., Dr. sc. nat.

(56) Entgegenhaltungen:
- DE-A- 2 829 154
- US-A- 3 065 324
- US-A- 3 579 775
- US-A- 3 596 519
- US-A- 3 653 263
- US-A- 3 742 191

## Beschreibung

Die vorliegende Erfindung betrifft ein Verfahren nach dem Oberbegriff von Anspruch 1 sowie eine Vorrichtung nach demjenigen von Anspruch 3 und eine Verwendung des genannten Verfahrens bzw. der genannten Vorrichtung nach Anspruch 5.

Behältnisse werden heute mit grosser Fabrikationsgeschwindigkeit hergestellt. Dies betrifft besonders geschweisste Dosen. Die steigende Produktionsgeschwindigkeit einerseits und die Verwendung von immer dünnwandigerem Material andererseits, erfordern eine hohe Präzision beim Herstellungsprozess, damit eine hohe Dichte der Behältnisse gewährleistet ist. Auch innerhalb einer Abfüllinie, also vom Standpunkt des Dosenverarbeiters her, ist eine hohe Dichte erforderlich, damit Lebensmittel nicht verderben, umweltfeindliche oder sehr wertvolle Materialien nicht aus den Behältnissen auslaufen. Sowohl die Hersteller, wie auch die Verarbeiter von derartigen Behältnissen sind auf eine gut funktionierende, zuverlässige Qualitätskontrolle angewiesen. Kleinste Undichten bzw. Leckagen müssen nachgewiesen werden können. Diese hohe Anforderung an die Dichteprüfung kann heute schon befriedigt werden.

Die Behälter werden entweder nach ihrer Herstellung oder nach ihrer Abfüllung auf Dichte geprüft. In beiden Fällen weisen sie dabei je nach vorangegangenem Fabrikationsablauf, undefinierte Temperaturen auf. Diese Temperatur variiert nicht nur von Anlage zu Anlage, sondern auch innerhalb einer Anlage an derselben Stelle. Als Gründe für die Temperaturstreuung können die Verarbeitung unterschiedlicher Behälter, eine variable Produktionsgeschwindigkeit, eine variable Umgebungstemperatur an verschiedenen Stellen oder ein unterschiedliches Behältermaterial genannt werden. Es ist auch denkbar, dass aufgrund eines Fehlers in der Produktionsstrasse letztere angehalten werden muss, dann wieder gestartet wird, derart, dass an derselben Stelle der Produktionsstrasse, die zu prüfenden Behältnisse mit verschiedenen Temperaturen anfallen. Zum Zeitpunkt der Dichteprüfung der Behältnisse muss also die Behältnistemperatur keinesfalls immer gleich sein. Auch bei in relativ engen Toleranzen konstant gehaltener Umgebungstemperatur ist die Behältnistemperatur trotzdem nicht immer gleich, denn die Behältnisse brauchen bei der Dichteprüfstelle noch keinesfalls thermisch mit der Umgebung ausgeglichen zu sein.

Die vorliegende Erfindung geht vom Problem aus, an einem offenen Behältnis eine Temperatur zu messen, die für den Körpertemperaturzustand repräsentativ ist, bzw. dessen thermischen Energiezustand. Solche Probleme treten insbesondere bei den oben erwähnten Dichteprüfungen auf, bei denen die Behältnisse thermisch nicht ausgeglichen zu sein brauchen.

Aus der US-A- 3 065 324 ist es bekannt, die Wärme einer Pille dadurch zu messen, dass in die Pille eine Bohrung eingearbeitet wird und die Wärmestrahlung aus dieser Bohrung gemessen wird. Dabei wird ausgenützt, dass eine solche Bohrung den Gesetzmässigkeiten der Hohlraumstrahlung gehorcht.

Aus der DE-A- 2 829 154 ist es weiter bekannt, eine Temperaturmessung an Bauelementen dadurch vorzunehmen, dass an einer Messstelle am Bauelement ein Lichtleiter vorgesehen wird, wobei am Fühlelement ein Hohlraum vorgesehen wird, derart, dass das Fühlelement an sich und bezüglich des Lichtleiters als Hohlraumstrahler wirkt.

Auch aus der US-A- 3 579 775 ist es bekannt, mit einer Lichtleiterfaser in einem Hohlraum eines Werkstückes zu messen, dessen Temperatur interessiert.

Aus der US-A- 3 596 519 ist es bekannt, die Wärmeverteilung entlang der Aussenfläche von Behältnissen durch Wärmestrahlungsmessung daraufhin zu untersuchen, ob, schadstellenbedingt, daran Strahlungsvariationen auftreten.

Aus der US-A- 3 742 191 ist ein Verfahren bzw. eine Vorrichtung eingangs genannter Art bekannt. An einer geheizten Rolle, z.B. an einer Umlenkrolle bei der Herstellung von synthetischen Fasern, wird nicht die Wärmestrahlung der korrosions- und verschmutzungsanfälligen Oberfläche abgetastet, sondern, als Hohlraum, koaxial zur Achse der Rolle und unmittelbar im Bereiche der Rollfläche, eine zylinderförmige Ringkavität vorgesehen. Es wird die Strahlung aus der umlaufenden Kavität gemessen, als Messung, die repräsentativ ist für den thermischen Energiezustand des Hohlraumes und, da unmittelbar an der Rollfäche angrenzend, somit auch, dem gestellten Problem entsprechend, der letzteren. Der Ringkavität axial gegenüberliegend ist ein Wärmesensor vorgesehen.

Die vorliegende Erfindung setzt sich zum Ziel, ein Messverfahren bzw. eine entsprechende Vorrichtung zu schaffen, womit auf möglichst einfache Art der thermische Energieinhalt eines offenen Behältnisses gemessen werden kann.

Dies wird mit dem eingangs erwähnten Verfahren, ausgebildet nach dem kennzeichnenden Teil von Anspruch 1 erreicht bzw. mit der eingangs genannten Vorrichtung, ausgebildet nach dem kennzeichnenden Teil von Anspruch 3.

Die Erfindung geht mithin von der Erkenntnis aus, dass gerade offene Behältnisse im Lichte des genannten Standes der Technik Hohlraumstrahler bilden bzw. sind, deren Hohlraum Wärme abstrahlt, dies aber in einem Masse, das für den thermischen Energiezustand des ganzen Behältniskörpers repräsentativ ist.

Die Erfindung wird anschliessend beispielsweise anhand einer Figur erläutert.

Sie zeigt beispielsweise eine erfindungsgemässe Anordnung zur Ausführung des erfindungsgemässen Verfahrens eines Wärmesensors, wie eines pyroelektrischen Detektors.

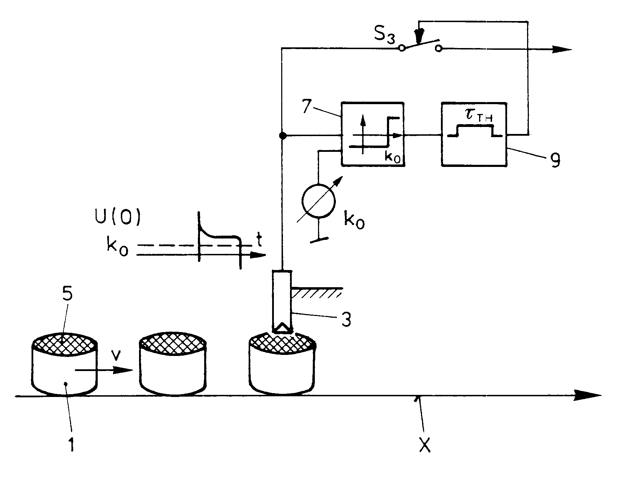

Es besteht ein Problem bei der Temperaturmessung an offenen Behältnissen darin, dass es schwierig ist, eine für den Temperaturzustand der Behältnisse relevante Messung vorzunehmen, unter Berücksichtigung, dass die Behältnistemperatur an unterschiedlichen Behältnisstellen mitnichten gleich zu sein braucht. Dies kann dadurch berücksichtigt werden, dass mehrere Temperaturfühler die Temperatur eines Behältnisses gleichzeitig abtasten und als relevanter Behältnistemperaturwert der Mittelwert der Temperaturwerte aller Sensoren ermittelt wird. Der hierzu zu betreibende Aufwand, insbesondere durch das Vorsehen mehrerer Temperatursensoren, ist relativ gross. Dabei muss berücksichtigt werden, dass in den meisten Anwendungsfällen die zu prüfenden Behältnisse nicht stationär sind bezüglich eines Bezugssystems mit den Messanordnungen, sondern, bei Durchlaufproduktion mit relativ hoher Geschwindigkeit auf einer Bahn, entlang welcher die Temperatursensoren anzuordnen sind, vorbeilaufen. Eine erfindungsgemässe Anordnung eines Temperaturfühlers, wie eines pyroelektrischen Detektors, ist in der Figur dargestellt. Entlang einer Bewegungsbahn X laufen mit der Geschwindigkeit v Behältnisse 1, die noch nicht verschlossen sind. Ein pyroelektrischer Detektor 3 ist im Bereich der Behältnisbewegungsbahn X so fixiert, dass die Behältnisöffnungen 5 an ihm vorbeilaufen. Es wurde nun gefunden, dass die thermische Strahlung im Inneren des Behältnisses 1 repräsentativ ist für den Mittelwert der Temperaturverteilung entlang des ganzen Behältnisses. Somit wird die Temperatur dann gemessen, wenn ein jeweiliges Behältnis 1 mit seiner Oeffnung 5 im Bereich der Sensibilitäts-Charakteristik des pyroelektrischen Detektors 3 liegt. Wann dies der Fall ist, kann durch einen separaten Positionsdetektor detektiert werden. Wesentlich einfacher ist es jedoch auszunützen, dass, wie mit einer schematisch dargestellten Ausgangssignalfunktion U(0) des Detektors 3 dargestellt, dessen Ausgangssignal sich dann, wenn eine Lücke zwischen den Behältnissen 1 am Detektor 3 vorbeiläuft, weitgehend unabhängig von der Umgebungstemperatur, vom Ausgangssignal unterscheidet, wenn der Detektor 3 einer Behältnisöffnung 5 gegenüberliegt. Somit wird das Ausgangssignal des Detektors 3 erst auf eine Komparatoreinheit 7 geschaltet, welcher ein Schwellwert kₒ vorgegeben wird, wobei letzterer so gewählt wird, dass das Ausgangssignal des Detektors 3 ihn nur überschreitet, wenn eine Oeffnung 5 in seine Sensibilitäts-Charakteristik einläuft. Mit dem Ausgang des Komparators 7 wird beispielsweise über ein monostabile Einheit 9 oder über eine bistabile, die bei nachmaligem Wiederunterschreiten des Schwellwertes kₒ rückgesetzt wird, ein Schalter S₆₃ geschlossen, welcher das Ausgangssignal des Detektors 3 als dann repräsentativ für die jeweilige Behältnistemperatur weiterschaltet. Dieses Prinzip lässt sich, abrückend vom spezifischen Einsatz zur Messung von Behältnistemperaturen im Zusammenhang mit der Dichteprüfung, in vielen anderen Fällen anwenden.

Mit dem vorgeschlagenen Verfahren zur Messung einer repräsentativen Temperatur eines thermisch nicht ausgeglichenen offenen Behältnisses wird ein hierzu einfacher Weg gefunden, ohne punktuell an verschiedenen Stellen des Behältnisses messen zu müssen.

## Patentansprüche

1. Verfahren zur Wärmemessung an einem Hohlraum, bei dem man am Hohlraum die thermische Strahlung unmittelbar über einer Hohlraumöffnung misst als Messung, die repräsentativ ist für den thermischen Energieinhalt bzw. Energiezustand des Hohlraumes, dadurch gekennzeichnet, dass man als Hohlraum denjenigen eines offenen Behältnisses verwendet und die thermische Strahlung als Messung misst, die repräsentativ ist für den thermischen Energiezustand des Behältnisses.

2. Verfahren nach Anspruch 1 für bewegte, offene Behältnisse, bei dem man aus der Aenderung der gemessenen Wärme, wenn die Oeffnung eines Behältnisses in bzw. aus dem Sensibilitätsbereich der Wärmemessung ein- bzw. austritt, bestimmt, wann die Wärmemessung für den Energiezustand des Behältnisses signifikant ist.

3. Vorrichtung zur Wärmemessung an offenen Hohlräumen, wobei eine Bewegungsbahn (X) für Gebilde mit offenen Hohlräumen vorgesehen ist sowie ein Wärmestrahlungssensor (3), und die Bewegungsbahn (X) so ausgebildet ist, dass die Oeffnungen (5) der Hohlräume (1) beabstandet am Sensor (3) vorbeilaufen, dadurch gekennzeichnet, dass als Hohlräume diejenigen offener Behältnisse vorgesehen sind und die Bewegungsbahn durch eine Fördereinrichtung für die Behältnisse gegeben ist.

4. Vorrichtung nach Anspruch 3, in welcher dem Sensor (3) eine schwellwertsensitive Einheit (7) nachgeschaltet ist, deren Ausgang den Ausgang des Sensors (3) auf einen Messausgang durchschaltet (S₃).

5. Verwendung des Verfahrens nach einem der Ansprüche 1 oder 2 bzw. der Vorrichtung nach einem der Ansprüche 3 oder 4 an offenen Dosenkörpern.

## Claims

1. A method for measuring heat in a cavity, wherein at said cavity the heat radiation immediately above an opening of the cavity is measured as a measurement representative of the thermal energy content or thermal energy state thereof, characterized in that said cavity is the cavity of an open container and said heat radiation is measured as a measurement representative of the thermal energy state of the container.

2. The method according to claim 1 for open moving containers, wherein from the change in the heat measured when the opening of a container goes in or out of the sensitive region of the heat measurement, it is determined when the heat measurement is indicative of the energy state of the container.

3. An apparatus for measuring heat in open cavities, wherein a travel path (X) for products with open cavities is provided as well as a heat radiation sensor (3), and the travel path (X) is arranged so that the openings (5) of the cavities (1) move spaced apart from one another past the sensor (3), characterized in that said cavities are cavities of open containers and said travel path is provided by a transporting device for the containers.

4. The apparatus according to claim 3, wherein, downstream of the sensor (3), a unit (7) sensitive to threshold values is provided which has its output connecting (S₃) the output of the sensor (3) to a measurement output.

5. Use of the method according to claim 1 or 2 and apparatus according to claim 3 or 4 for open can bodies.

## Revendications

1. Procédé pour mesurer la température au niveau d'une cavité, selon lequel on mesure au niveau de ladite cavité, comme mesure représentative de son contenu d'énergie thermique ou de son état d'énergie thermique, le rayonnement thermique juste au-dessus d'une ouverture de cavité, caractérisé en ce qu'on utilise comme cavité la cavité d'un récipient ouvert et on mesure le rayonnement thermique comme mesure représentative de l'état d'énergie thermique du récipient.

2. Procédé selon la revendication 1 pour des récipients ouverts en mouvement, selon lequel, à partir de la variation de la chaleur mesurée, lorsque l'ouverture d'un récipient entre dans la zone de sensibilité de la mesure de chaleur ou sort de cette zone, on détermine le moment où la mesure de chaleur est significative de l'état d'énergie du récipient.

3. Dispositif pour mesurer la température au niveau de cavités ouvertes, avec lequel il est prévu une trajectoire (X) pour des produits à cavités ouvertes ainsi qu'un détecteur de rayonnement thermique (3), et la trajectoire (X) est conçue pour que les ouvertures (5) des cavités (1) passent devant le détecteur (3) de façon espacée, caractérisé en ce qu'on prévoit, comme cavités, les cavités de récipients ouverts et la trajectoire est définie par un dispositif de transport pour les récipients.

4. Dispositif selon la revendication 3, dans lequel il est prévu, montée en aval du détecteur (3), une unité sensible aux valeurs seuils (7) dont la sortie relie (S₃) la sortie du détecteur (3) à une sortie de mesure.

5. Utilisation du procédé selon l'une des revendications 1 ou 2 et du dispositif selon l'une des revendications 3 ou 4 pour des corps de boîtes ouverts.
